# EUROPÄISCHE PATENTSCHRIFT

(11) **EP 0 619 144 B1**
(45) Veröffentlichungstag und Bekanntmachung des Hinweises auf die Patenterteilung: **04.02.1998**
(21) Anmeldenummer: 94105104.7
(22) Anmeldetag: 31.03.1994
(51) Int. Cl.: B04B 5/04

(54) **Schlauchanordnordnung für eine gleitdichtungsfreie Zentrifuge**
Tube arrangement for a sliding seal-free centrifuge
Arrangement de tube pour centrifugeur sans joint d'étanchéité glissant

(30) Priorität: 03.04.1993 DE 4310975
(43) Veröffentlichungstag der Anmeldung: 12.10.1994
(73) Patentinhaber: Fresenius AG, 61350 Bad Homburg v.d.H (DE)
(72) Erfinder: Witthaus, Friedrich, D-66606 St. Wendel (DE); Lay, Carlo, D-66793 Saarwellingen (DE); Biesel, Wolfgang, Dr., D-66564 Ottweiler (DE)
(74) Vertreter: Luderschmidt, Schüler & Partner GbR

(56) Entgegenhaltungen:
- EP-A- 0 526 869
- WO-A-82/01321
- FR-A- 2 650 777

## Beschreibung

Die Erfindung betrifft eine Schlauchanordnung für eine gleitdichtungsfreie Zentrifuge.

Zur Trennung von Zellsuspensionen, wie z.B. Blut, werden gleitdichtungsfreie Zentrifugen eingesetzt, wie sie beispielsweise in der DE-A-32 42 541 beschrieben sind. Dabei wird das Blut über die Schlauchanordnung in die Zentrifuge geführt, in der es in seine einzelnen Bestandteile aufgetrennt wird, die in der Schlauchanordnung durch verschiedene Kanäle wieder nach außen geführt werden. Dabei ist die Schlauchanordnung an ihrem Einführungsende stationär gehalten und führt von diesem Einführungsende bogenförmig um den Rotor der Zentrifuge herum und mündet dort an ihrem anderen Ende in die Trennkammer der Zentrifuge ein. Um zu verhindern, daß es zwischen dem ortsfesten Ende einerseits und dem sich mit der Umdrehungsgeschwindigkeit der Zentrifuge drehenden Schlauchende andererseits zu einem Verdrillen und damit zu einem Abreißen der Schlauchanordnung kommt, erfährt die Schlauchanordnung beim Herumführen um die sich drehende Zentrifugenkammer eine stete Entdrillungsbehandlung, d.h., der Schlauch dreht sich nicht nur um die Separationskammer herum, sondern dreht sich vielmehr auch stets um seine eigene Schlauchachse, gegensinnig zur Verdrillungsdrehung.

Ein Problem bei derartigen Schlauchanordnungen ist daher deren Relativbewegung, die zu Reib- und Scherkräften an der Schlauchanordnung führt. Hierdurch kann es einerseits zu einem Abknicken der Schlauchanordnung in ihrem Endbereich und andererseits zu einer Abnutzung der Schlauchteile untereinander kommen. Um die Reibung zu reduzieren und die Schwerkraftaufnahme zu verbessern, hat man zunächst ein relativ hartes Material für die Schlauchanordnung eingesetzt. Aufgrund der Eigenumdrehung infolge der Entdrillungsbehandlung schlägt die Schlauchanordnung bei jeder Umdrehung der Zentrifuge um, was zu einer starken Geräuschentwicklung führt, die unerwünscht ist. Wird andererseits das Schlauchmaterial weich gemacht, so nimmt zwar die Geräuschentwicklung ab, jedoch die Abnutzung des Schlauchmaterials zu, so daß es zu einem Durchscheuern des Schlauchmaterials kommen kann.

Zum Problem des Abknickens wurden bereits in der US-A-4,109,852, US-A-4,164,318 und der EP-A-112 990 Vorschläge dahingehend gemacht, daß jeweils an den Schlauchenden flexible Hülsen eine multilumige Schlauchanordnung umgeben sollen, die über eine Mehrzahl von Zuführungs-und Abführungskanälen verfügt. Derartige Einzelteile sind relativ aufwendig herzustellen und zu montieren sowie in Anwendung als Einmalartikel sehr kostspielig. Darüber hinaus erfordert das Einlegen des Schlauches einen erhöhten Bedienungsaufwand.

Zum Problem des Abriebs ist es aus der EP-A-260 034 bekannt, flexible Schläuche mit einem geflochtenen Abriebschutz zu versehen. Wird der Abriebschutz axial gestreckt, zieht er sich radial zusammen und legt sich an die Schläuche an. Ein derartiger Abriebschutz ist konstruktiv aufwendig und für Einmalartikel, wie sie in medizinischen Bereichen angewendet werden, wenig geeignet.

Demzufolge ist festzuhalten, daß Schlauchführungen oder ganze Umhüllungen konstruktiv sehr aufwendig sind. Es sind zusätzliche Teile, wie Lager und dergleichen erforderlich, um einen sicheren Betrieb zu gewährleisten. Weist hingegen der Schlauch selbst keine Führungsteile auf, so kann eine abgerundete Kante an den Schlauchenden das Abknicken verhindern, nicht jedoch den Abrieb, da die Schläuche an diesen abgerundeten Kanten schleifen, wie dies in vorliegender Erfindung aufgezeigt ist.

In der US-A-4 299 256 ist eine Schlauchanordnung mit einem oder mehreren Lumina aus mindestens einem Polymermaterial für eine gleitdichtungsfreie Zentrifuge beschrieben, die eine äußere Schicht aus PVC mit einem geringen Anteil Silikonöl und eine innere Schicht eines weiteren Kunststoffs aufweist, die silikonölfrei ist. Der Einsatz von mit Silikonöl gefüllten Kunststoffmaterialien ist zum einen teuer und führt zu einem relativ unbeständigen weichen Außenmaterial, das dem Zentrifugenschlauch nicht die notwendige Stabilität bei hohen Zentrifugationsgeschwindigkeiten gibt.

Der Erfindung liegt daher die Aufgabe zugrunde, eine Schlauchanordnung der vorstehend erwähnten Art zur Verfügung zu stellen, die sowohl die für die Zentrifugation notwendige Festigkeit und Widerstandsfähigkeit sowie damit verbundene Abriebfestigkeit aufweist, als auch die Flexibilität beibehält und nahezu geräuschlos bei der Zentrifugation eingesetzt werden kann.

Die Lösung der Aufgabe erfolgt dadurch, daß der Schlauch als koextrudierter Schlauch mit unterschiedlich harten Materialien hergestellt wird.

Die erfindungsgemäße Schlauchanordnung ist als eine koextrudierte Schlauchanordnung ausgestaltet, die aus einem inneren weichen Schlauchbereich und aus einem äußeren harten Schlauchbereich besteht. Derartige koextrudierte Schläuche werden nach an sich bekannten Extrusionsverfahren hergestellt, wobei einer Koextrusionsdüse zwei unterschiedliche geschmolzene Polymermaterialien zugeführt werden. Beim Extrudieren entsteht eine Schlauchanordnung aus zwei unterschiedlichen, fest aneinander haftenden Schlauchmaterialien, die als ein Schlauchgebilde erscheinen.

Die erfindungsgemäße Schlauchanordnung hat zunächst den Vorteil, daß die äußere harte Schlauchschicht ein Durchscheuern des Schlauchmaterials verhindert. Andererseits ist der Schlauch durch die innenliegende Schlauchschicht so flexibel, daß er nahezu geräuschfrei um seine eigene Achse abrollen kann, was zu einem Verschwinden des Geräusches beim Schlauchumschlagen führt, wie dies beim Umschlagen von Gummireifen bei der Reifenmontage bekannt ist.

Demzufolge nimmt also der harte äußere Bereich die Abriebsbelastung auf, während der innere weichere Bereich die Walkarbeit leistet. Insofern sind die Anforderungen an die Abriebfestigkeit des Materials des inneren Bereichs der Schlauchanordnung wesentlich geringer, so daß weicheres Schlauchmaterial mit verbesserter Standfestigkeit und geringerer Geräuschentwicklung verwendet werden kann.

Das Schlauchmaterial für die Außenschicht hat eine Shore-Härte D von etwa 50-90, vorzugsweise etwa 60-70.

Demgegenüber weist das für den Innenschlauch vorgesehene Schlauchmaterial eine Shore-Härte A von 50-100, vorzugsweise 85-95, insbesondere etwa 90 auf. Da die erfindungsgemäße Schlauchanordnung koextrudiert wird, werden als Schlauchmaterial thermoplastische Polymere eingesetzt. Als bevorzugtes Polymermaterial für den Außenschlauch sind Polyamide, Copolymere von Polyamid und Polyethylen und dergleichen einsetzbar. Für den inneren Schlauch werden demgegenüber weichere Polymermaterialien eingesetzt, beispielsweise PVC oder Polyurethan (PU). Dabei können erfindungsgemäß nicht nur zwei Schlauchschichten, sondern auch darüber hinaus mehrere Schlauchschichten koextrudiert werden, wobei die Shore-Härte dann stufenweise nach außen ansteigt. Mehrfachschlauchbündel aus in solch einer Art koextrudierten Einzelschläuchen zeigen eine ausgeprochen hohe Abriebfestigkeit und damit lange Lebensdauer sowie auch einen durch die Beweglichkeit und Flexibilität bedingten geräuscharmen Betrieb.

Wie vorstehend geschildert, wird üblicherweise ein Schlauchbündel für die Zuführung der aufzutrennenden Flüssigkeit und die Abführung der aufgetrennten Fraktionen eingesetzt. Erfindungsgemäß weisen die Einzelschläuche dann nur ein Lumen auf, d.h., es müssen mehrere Schläuche zu einer Schlauchanordnung zusammengeführt werden, wie dies beispielsweise aus der DE-A-36 32 241 bekannt ist. Diese mehrlumige Schlauchanordnung, bestehend aus mehreren Einzelschläuchen, wird an ihren Enden jeweils um 180° gegeneinander verdreht in einem Endstück fixiert. Insofern wird auf dieses Dokument aus Offenbarungszwecken Bezug genommen.

In einer weiteren Ausführungsform kann der Schlauch auch als Multilumenschlauch mit einem weichen Kern mit mehreren Lumina und einem harten Außenbereich ausgebildet sein.

Ausführungsbeispiele der Erfindung sind in den Zeichnungen dargestellt. Es zeigen
- **Figur 1**: eine Ausführungsform der erfindungsgemäßen Schlauchanordnung, schematisch dargestellt, und
- **Figur 2**: eine einen Ausschnitt der Ausführungsform in einem Teillängsschnitt.

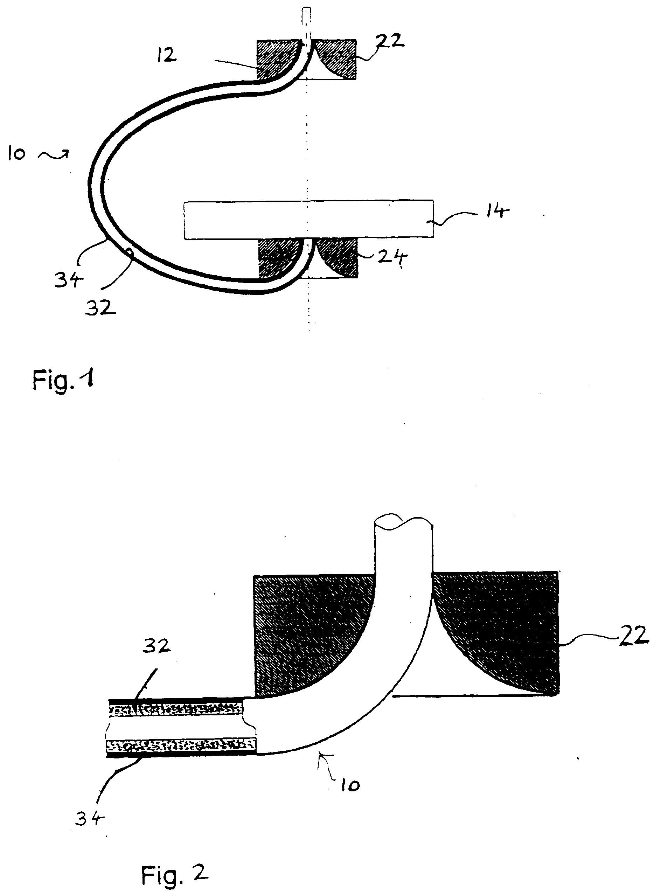

Figur 1 zeigt eine Schlauchanordnung 10, in Form eines umgekehrten Fragezeichens, die sich von einem stationären Punkt 12 zu einer Zentrifugenkammer 14 erstreckt.

Im Bereich des stationären Punkts 12 ist zur verbesserten Führung des Schlauchs eine erste Schlauchführung 22, während auf der Unterseite der Zentrifugenkammer 14 eine zweite Schlauchführung 24 vorgesehen ist.

Aus Gründen der Übersichtlichkeit ist nur ein Schlauch 10 in Figur 1 und 2 dargestellt. Zur Zu- und Abführung der einzelnen Fraktionen ist jedoch eine Mehrzahl dieser Schlauchanordnungen 10 im Einsatz, die entsprechend der DE-A-36 32 241 angeordnet sein können.

Figur 1 und 2 zeigen eine schematische Darstellung der Schlauchanordnung 10.

Diese Schlauchanordnung 10 weist einen Innenbereich 32 auf, der über seine gesamte Länge mit einem Außenbereich 34 koextrudiert ist. Dies ist insbesondere aus der Darstellung von Figur 2 im einzelnen ersichtlich.

Ein Verfahren zur Herstellung einer Schlauchanordnung 10 gemäß Figur 1 und 2 besteht in der Koextrusion eines inneren weichen Polymermaterials wie Polyvinylchlorid oder Polyurethan, und eines harten Polymermaterials außen, vorteilhafterweise aus Polyamid. Die Schlauchanordnung 10 kann in zwei oder mehreren Schichten verschiedener Polymere mit stufenweise steigender Shore-Härte koextrudiert werden.

## Patentansprüche

1. Schlauchanordnung mit einem oder mehreren Lumina aus mindestens einem polymeren Material für eine gleitdichtungsfreie Zentrifuge, welche Schlauchanordnung mindestens zwei Schichten aus mindestens einem polymeren Material mit unterschiedlichen Shore-Härten in koextrudierter Form aufweist, dadurch gekennzeichnet, daß die Shore-Härten von innen nach außen ansteigen wobei der Innenbereich (32) eine Shore-Härte A von 50-100 und der Außenbereich (34) eine Shore-Härte D von 50-90 aufweist.

2. Schlauchanordnung nach Anspruch 1, dadurch gekennzeichnet, daß der Außenbereich eine Shore-Härte D von 60-70 und der Innenbereich eine Shore-Härte A von etwa 90 aufweist.

3. Schlauchanordnung nach Anspruch 1, dadurch gekennzeichnet, daß der Außenbereich (34) aus Polyamid oder Copolymeren mit Polyethylen hiervon und der Innenbereich (32) aus Polyvinylchlorid oder Polyurethan besteht.

## Claims

1. A hose arrangement with one or more elements, of at least one polymer material, for a centrifuge free of sliding seals, the said hose arrangement featuring at least two layers of at least one polymer material with differing Shore hardness values, characterised in that the Shore hardness values rise from the inside to the outside, in co-extruded form, in which situation the inside area (32) features a Shore hardness A from 50-100, and the outer area (34) a Shore hardness D of 50-90.

2. A hose arrangement according to Claim 1, characterised in that the outer area features a Shore hardness D of 60-70 and the inner area a Shore hardness A of about 90.

3. A hose arrangement according to Claim 1, characterised in that the outer area (34) consists of polyamide or copolymers with polyethylene, and the inner area (32) consists of polyvinyl chloride or polyurethane.

## Revendications

1. Arrangement de tuyaux avec une ou plusieurs lumières en au moins une matière polymère pour une centrifugeuse sans joints d'étanchéité glissants, lequel arrangement de tuyaux présente au moins deux couches d'au moins une matière polymère ayant des duretés Shore différentes, sous forme coextrudée, caractérisé ce que les duretés Shore augmentent de l'intérieur vers l'extérieur, où le domaine intérieur (32) présente une dureté Shore A de 50 à 100 et le domaine extérieur (34) une dureté Shore D de 50 à 90.

2. Arrangement de tuyaux selon la revendication 1, caractérisé en ce que la partie extérieure présente une dureté Shore de 60 à 70 et la partie intérieure une dureté Shore A d'environ 90.

3. Arrangement de tuyaux selon la revendication 1, caractérisé en ce que la partie extérieure (34) est constitué de polyamides ou de copolymères de celui-ci avec le polyéthylène et la partie intérieure (32) de poly(chlorure de vinyle) ou de polyuréthanne.
